# EUROPÄISCHE PATENTSCHRIFT

(11) **EP 0 656 240 B1**
(45) Veröffentlichungstag und Bekanntmachung des Hinweises auf die Patenterteilung: **08.04.1998**
(21) Anmeldenummer: 94117402.1
(22) Anmeldetag: 04.11.1994
(51) Int. Cl.: B23B 51/00

(54) **Bohrvorrichtung mit radial auslenkbarer Bohrspindel**
Drilling device with radially movable drill spindle
Dispositif de perçage avec broche déplaçable radialement

(30) Priorität: 04.12.1993 DE 4341378
(43) Veröffentlichungstag der Anmeldung: 07.06.1995
(73) Patentinhaber: fischerwerke Artur Fischer GmbH & Co. KG, D-72178 Waldachtal (DE)
(72) Erfinder: Lind, Stefan, Dipl.-Ing., D-72178 Waldachtal (DE); Bohnet, Hartmut, D-72178 Waldachtal (DE); Haug, Willi, D-72250 Freudenstadt/Musbach (DE)

(56) Entgegenhaltungen:
- EP-A- 0 116 154
- EP-A- 0 142 611
- EP-A- 0 484 647

## Beschreibung

Die Erfindung betrifft eine Bohrvorrichtung mit radial auslenkbarer Bohrspindel gemäß Oberbegriff des Anspruchs 1, und wie aus EP-A-0 142 611 bekannt.

Zur Herstellung von Bohrlöchern mit Hinterschneidung sind Bohrvorrichtungen bekannt, die als Bohrwerkzeug einen Bohrer mit zum freien Ende hin sich erweiterndem Bohrkopf besitzen. Die Hinterschneidung am Bohrlochgrund wird nun dadurch erzeugt, daß der Bohrkopf durch eine Schwenkbewegung oder eine Taumelbewegung seitlich ausgelenkt wird. Mit seitlichen Schneiden oder einem seitlichen Reibbelag am Bohrkopf wird dabei die Hinterschneidung im Bereich des Bohrlochgrundes ausgerieben. Damit mit einem derartigen Bohrkopf nicht nur die Hinterschneidung hergestellt werden kann, sondern auch der zylindrische Teil der Bohrung, ist der Bohrkopf an seiner Stirnseite mit einem Reibbelag, beispielsweise aus Diamantsplittern, versehen. Soll nun mit einem derartigen Bohrer in eine Fassadenplatte auch der zylindrische Teil des Bohrlochs hergestellt werden, so kommt die gesamte Stirnseite des Bohrkopfes in Eingriff mit dem harten Material der Fassadenplatte. Aufgrund der geringen Schnittgeschwindigkeit im Zentrum der Stirnseite des Bohrkopfes, muß mit einem hohen Anpreßdruck gebohrt werden, was zu einem vorzeitigen Stumpfwerden der Diamantsplitter führt. Damit wird die Standzeit des Bohrwerkzeuges erheblich herabgesetzt.

Aus der EP-A 0 142 611 ist eine Vorrichtung zur Herstellung einer Hinterschneidung in einem vorgefertigten, zylindrischen Bohrloch bekannt. Diese Vorrichtung weist eine elastische Welle auf, an deren Ende ein Trennwerkzeug mit Schneiden an seiner Umfangsfläche angebracht ist. Die elastische Welle liegt in einer im wesentlichen zylindrischen, den Durchmesser des vorgebohrten Bohrlochs aufweisenden Auslenkeinrichtung ein, welche ein radiales Auslenken der elastischen Welle in einer Richtung mittels einer Schrägfläche ermöglicht. Zur Herstellung der Hinterschneidung wird die elastische Welle mit dem an ihrem Ende angebrachten Trennwerkzeug und der sie umgebenden Auslenkeinrichtung in das vorgefertigte, zylindrische Bohrloch eingeführt und anschließend die elastische Welle mit dem Trennwerkzeug ohne weitere Bewegung in axialer Richtung radial ausgelenkt. Sobald die gewünschte Auslenkung erreicht ist, wird die Auslenkeinrichtung mittels einer Ratsche mindestens eine volle Umdrehung im Kreis gedreht, um die Hinterschneidung auf dem vollem Umfang des Bohrlochs herzustellen. Die bekannte Vorrichtung hat den Nachteil, daß sie ein vorgefertigtes, zylindrisches Bohrloch benötigt, und daß ihre Konstruktion aufwendig ist und viele Einzelteile benötigt.

Der Erfindung liegt die Aufgabe zugrunde, eine Bohrvorrichtung zur Herstellung von Bohrlöchern mit Hinterschneidung zu schaffen, bei der während eines axialen Vorschubs zum Bohren des zylindrischen Teils des Bohrlochs eine radiale Relativbewegung zwischen dem Bohrer und einem Werkstück stattfindet, um die Standzeit des Bohrers zu erhöhen.

Die Lösung dieser Aufgabe erhält man durch die im Anspruch 1 angegebenen Merkmale. Die elastische Welle bildet eine radialelastische Lagerung der Bohreraufnahme, die Schwingungen des Bohrkopfes durch Eigen- oder Fremderregung radial in allen Richtungen ermöglicht. Die Schwingungen des Bohrkopfes können dadurch angeregt werden, daß am Bohrer eine geringfügige Unwucht ausgebildet ist oder dieser insbesondere mit einer asymmetrischen Stirnfläche versehen ist. Die Schwingungen des Bohrkopfes in radialer Richtung führen zur Herstellung eines zylindrischen Bohrlochs, dessen Durchmesser größer als der Bohrerdurchmesser ist. Die elastische, an der Bohrspindel befestigte Welle kann aus Stahl mit einem derart bemessenen Durchmesser und einer derartigen Länge hergestellt sein, daß die erforderliche Elastizität erreicht wird. Sie liegt in einem mit Fett oder einem anderen Dämpfungsmittel gefüllten Dämpfungsraum ein, um die Schwingungen der elastischen Welle und damit auch des Bohrkopfes zu dämpfen.

Nach Erreichen einer gewünschten Bohrlochtiefe wird zur Herstellung der Hinterschneidung die Bohrspindel mitsamt der elastischen Welle, der Bohreraufnahme und dem Bohrer in an sich bekannter Weise beispielsweise mit einer Taumelbewegung oder einer Schwenkbewegung radial ausgelenkt. Diese radiale Auslenkung ist der radialen Schwingung der an der elastischen Welle angebrachten Bohreraufnahme überlagert.

Die Bohrvorrichtung kann auch mit einer Vibrationseinrichtung im Bereich der elastischen Welle ausgerüstet sein, die eine definierte Schwingung erzeugt. Als Vibrationseinrichtung kann hierbei ein pulsierend angesteuerter Elektromagnet dienen, dessen Magnetfeld direkt auf die Welle oder auf einen an ihr befestigten ferromagnetischen Körper einwirkt. Dadurch kann die radiale Auslenkung des Bohrkopfes mit einer vorgegebenen radialen Kraft und mit einer gewünschten Frequenz erfolgen. Ein an der elastischen Welle angebrachter Anschlag kann dabei die maximale Auslenkung des Bohrlkopfes festlegen.

Gleichermaßen kann auch die Platte, die auf einem Schwingtisch waagerecht aufliegt, mittels einer Vibrationseinrichtung in horizontale Schwingung versetzt werden. Auch hierfür kann ein Elektromagnet eingesetzt werden, der auf ein mit der Platte oder dem Schwingtisch verbundenes ferromagnetisches Element einwirkt und dieses in Schwingung versetzt.

Die Erfindung wird nachfolgend anhand von in der Zeichnung dargestellten Ausführungsbeispielen näher erläutert.

Es zeigen:
- Figur 1: eine Bohrvorrichtung mit einem Schwingtisch,
- Figur 2: eine über eine elastische Welle mit einer Bohrspindel verbundene Bohreraufnahme für eine Bohrvorrichtung gemäß Figur 1,
- Figur 3: eine Bohrspindel mit elastischer Welle wie bei Figur 2, jedoch mit einer elektrischen Vibrationseinrichtung,
- Figur 4: eine detailliertere Darstellung eines auf die elastische Welle wirkenden Elektromagneten im Längsschnitt und
- Figur 5: die Draufsicht auf den Elektromagneten gemäß Figur 4.

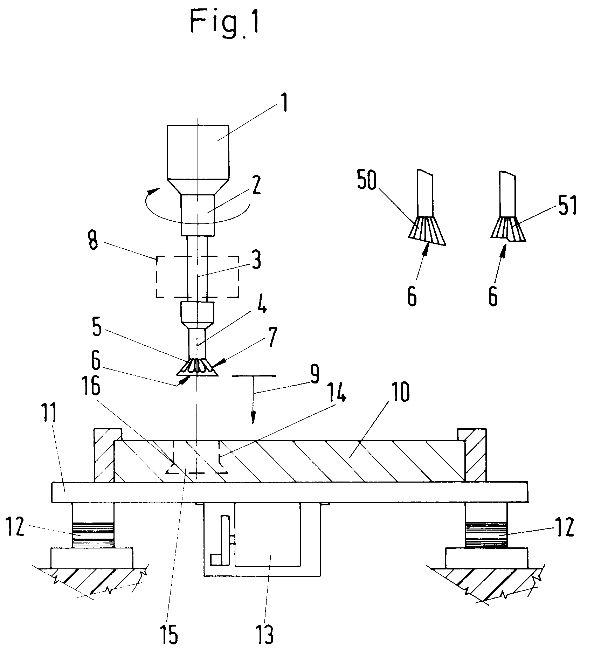

Die in Figur 1 dargestellte Bohrvorrichtung besitzt einen Antrieb 1 mit einer Bohrspindel 2, die über eine elastische Welle 3 einen Bohrer 4 antreibt. Der Bohrer besitzt einen sich kegelförmig erweiternden Bohrkopf 5, der an seiner stirnseitigen Reibfläche 6 und an seiner Mantelfläche 7 mit einem Reibbelag aus Diamantsplittern versehen ist.

Die elastische Welle 3 ermöglicht eine radialelastische Auslenkung des Bohrkopfes 5 aufgrund von eigenerregten oder zwangsweise angeregten Schwingungen der elastischen Welle 3. Mittels einer Vibrationseinrichtung 8 kann die Welle 3 zwangsweise zu Schwingungen angeregt werden, so daß man hier auch von einer definierten Auslenkung der Welle 3 sprechen kann.

Die Eigenerregung der Welle 3 kann durch asymmetrische Formgebung im Bereich des Bohrkopfes begünstigt werden. Hierzu sind ein Bohrkopf 50 mit abgeschrägter Stirnfläche und ein Bohrkopf 51 mit abgestufter Stirnfläche als Ausführungsbeispiele dargestellt.

Der Bohrer 4 läßt sich gemäß Pfeilrichtung 9 auf eine Platte 10 zur Herstellung eines Bohrlochs absenken. Bei der Platte 10 handelt es sich um eine Fassadenplatte, die auf einem Schwingtisch 11 aufliegt. Der Schwingtisch 11 ist seinerseits über das radialelastische Lagerelement 12 abgestützt und wird mittels eines Unwuchtmotors 13 als Vibrationseinrichtung in horizontale Vibration versetzt.

An der Platte 10 ist mit unterbrochener Linie der Längsschnitt einer zu erstellenden Bohrung mit Hinterschneidung dargestellt. Während der Herstellung des zylindrischen Teils 14 der Bohrung 15 ist eine radiale Relativbewegung zwischen Platte 10 und Bohrkopf 5 vorgesehen, um im Zentrum der Reibfläche 6 des Bohrkopfes 5 höhrere Reib-oder Schnittgeschwindigkeiten zu erhalten. Sofern Vibrationseinrichtungen zur Erzeugung dieser Relativbewegung verwendet werden, sind diese wenigstens während der Herstellung des zylindrischen Teils 14 wirksam. Beim Ausreiben der Hinterschneidung 16, wobei der Bohrkopf in ansich bekannter Weise eine Taumelbewegung oder Schwenkbewegung ausführt, tritt ohnehin eine radiale Relativbewegung zwischen Bohrkopf 5 und Platte 10 auf.

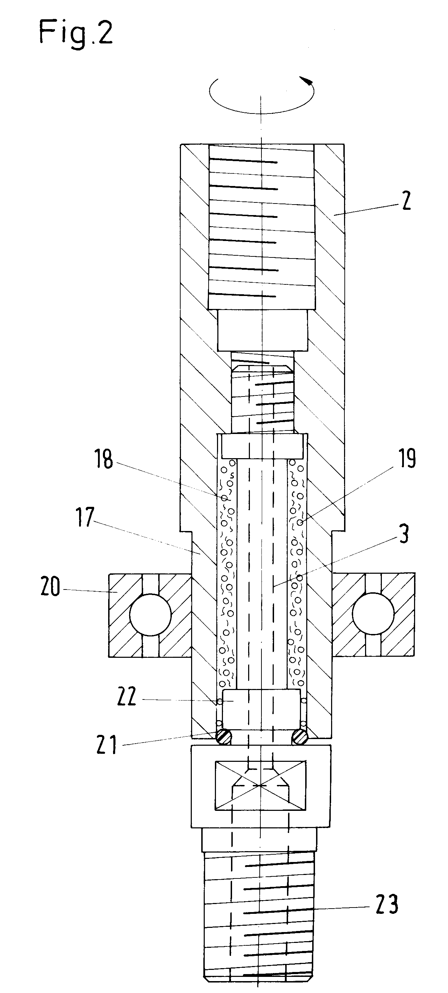

Figur 2 zeigt eine Ausführung einer Bohrspindel 2 mit einer hülsenförmigen Spindelverlängerung 17, die einen Dämpfungsraum 18 umschließt, in welchem die elastische Welle 3, umgeben mit einem Dämpfungsmittel 19, einliegt. Als Dämpfungsmittel 19 kann ein mit Schrot angereichertes Fett verwendet werden.

Die hülsenförmige Spindelverlängerung 17 ist in einem Radiallager 20 gelagert und ist stirnseitig mittels einer Dichtung 21 gegenüber der Welle 3 abgedichtet. Ein auf der Welle 3 befestigtes Anschlagelement 22 begrenzt die radiale Auslenkung der elastischen Welle 3.

Am vorderen Ende der Welle 3 ist eine Bohreraufnahme 23 angebracht, an der der Bohrer 4 (Figur 1) befestigt wird. Bei der Ausführung gemäß Figur 2 wird die elastische Welle durch Eigenanregung beim Bohrvorgang in Schwingung versetzt, so daß die gewünschte radiale Auslenkung im Bereich des Bohrkopfes auftritt.

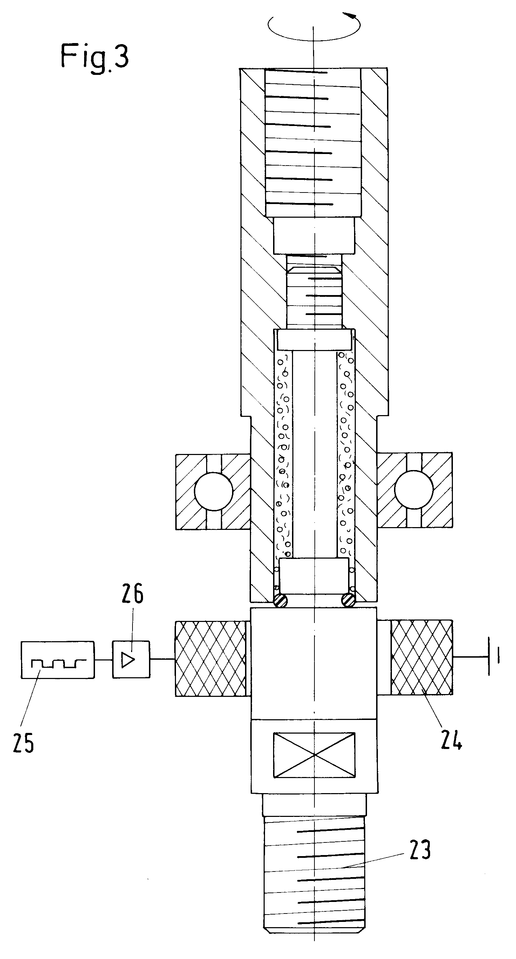

Bei der in Figur 3 dargestellten Ausführung ist ein Elektromagnet 24 zur oszillierenden Auslenkung der Bohreraufnahme 23 vorgesehen. Der Elektromagnet 24 wird über einen Oszillator 25 und eine Endstufe 26 pulsierend angesteuert.

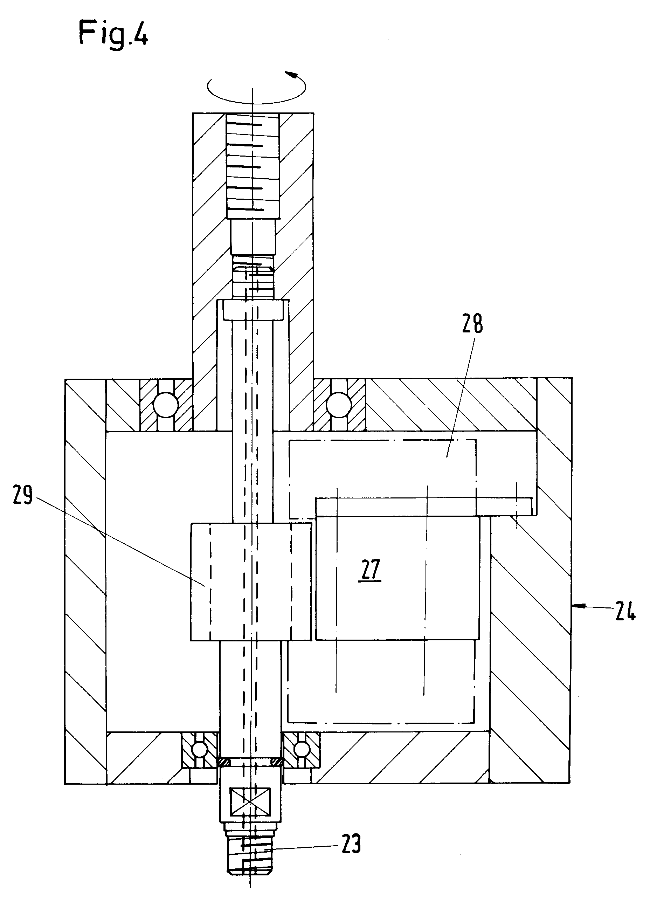

In Figur 4 ist die Ausführung des Elektromagneten 24 detaillierter im Längsschnitt dargestellt. Die Spule 27 umgreift einen Eisenkern 28, dessen Magnetfeld auf einen ferromagnetischen Körper 29 einwirkt, welcher auf der Welle 3 befestigt ist.

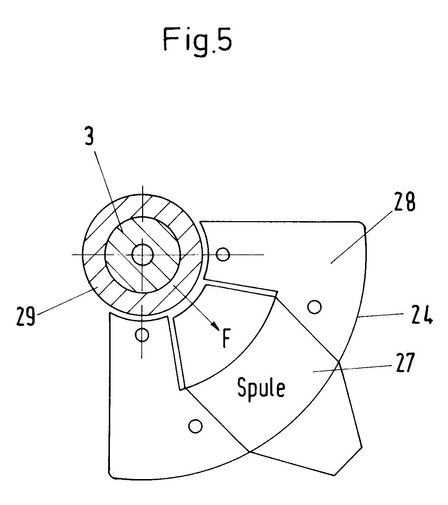

In Figur 5 sind der Elektromagnet 24 in Draufsicht und der auf der Welle 3 befestigte Körper 29 im Querschnitt dargestellt. Der Eisenkern 28 besteht aus einem Blechpaket. Die vom Elektromagneten auf den Körper 29 pulsierend wirkende Kraft F ist mit einem radial vom Körper 29 ausgehenden Richtungspfeil angegeben.

## Patentansprüche

1. Bohrvorrichtung zur Herstellung hinterschnittener Bohrungen in Fassadenplatten, bestehend aus einer von einer Bohrspindel (2) angetriebenen Bohreraufnahme (23), an der ein Bohrer (4) mit einer stirnseitigen Reibfläche (6) axial absteht, wobei der Bohrer (4) zur Herstellung der Hinterschneidung in der Bohrlochtiefe radial bezüglich der Mittelachse der Bohrspindel (2) auslenkbar ist, und wobei die Bohreraufnahme (23) über eine elastische Welle (3) als elastisches Lagerelement an der Bohrspindel (2) befestigt ist, **dadurch gekennzeichnet**, daß die elastische Welle (3) in einem mit einem Dämpfungsmittel (19) gefüllten Dämpfungsraum (18) einer hülsenförmigen Spindelverlängerung einliegt.

2. Bohrvorrichtung nach Anspruch 1, **dadurch gekennzeichnet**, daß der Dämpfungsraum (18) mittels einer die elastische Welle (3) umgebenden, radialelastischen Dichtung (21) nach außen abgedichtet ist.

3. Bohrvorrichtung nach einem der vorhergehenden Ansprüche, **dadurch gekennzeichnet**, daß eine Vibrationseinrichtung (8) die Bohreraufnahme (23) in radiale Schwingung versetzt.

4. Bohrvorrichtung nach Anspruch 3, **dadurch gekennzeichnet**, daß die Vibrationseinrichtung (8) ein im Bereich der Bohreraufnahme (23) oder der elastischen Welle (3) angreifender Elektromagnet (24) ist, dessen Magnetfeld pulsiert.

5. Bohrvorrichtung nach einem der vorhergehenden Ansprüche, **dadurch gekennzeichnet**, daß an der elastischen Welle (3) ein Anschlagelement (22) angebracht ist, das die radiale Auslenkung der Welle (3) begrenzt.

6. Bohrvorrichtung nach einem der Ansprüche 1 bis 5, **dadurch gekennzeichnet**, daß die Spindelverlängerung (17) in einem Radiallager (20) gelagert ist.

7. Bohrvorrichtung nach einem der vorhergehenden Ansprüche, **dadurch gekennzeichnet**, daß der Bohrer (4) einen zur stirnseitigen Reibfläche (6) sich erweiternden Bohrkopf (5) hat und die Reibfläche (6) gegenüber der Bohrmittelachse geneigt oder asymmetrisch abgestuft ist.

8. Bohrvorrichtung nach einem der vorhergehenden Ansprüche, **dadurch gekennzeichnet**, daß die Platte (10) auf einem Schwingtisch (11) aufliegt, der mittels einer Vibrationseinrichtung (13) in horizontale Schwingung versetzt wird.

## Claims

1. Drilling device for producing undercut drilled holes in facing panels, consisting of a drill bit chuck (23) driven by a drill shank (2) and from which a drill bit (4) having a front end abrasive face (6) projects axially, wherein the drill bit (4) is arranged to be displaced radially with respect to the centre line of the drill shank (2) to produce the undercut at the bottom of the drilled hole, and wherein the drill bit chuck (23) is secured to the drill shank (2) by way of a resilient shaft (3) serving as the resilient bearing element, characterized in that the resilient shaft (3) lies in a damping chamber (18), filled with a damping agent (19), of a sleeve-shaped shank extension.

2. A drilling device according to claim 1, characterized in that the damping chamber (18) is sealed with respect to the outside by means of a radially resilient seal (21) surrounding the resilient shaft (3).

3. A drilling device according to one of the preceding claims, characterized in that a vibration device (8) causes the drill bit chuck (23) to oscillate radially.

4. A drilling device according to claim 3, characterized in that the vibration device (8) is an electromagnet (24), the magnetic field of which is pulsed, acting in the region of the drill bit chuck (23) or the resilient shaft (3).

5. A drilling device according to one of the preceding claims, characterized in that a stop element (22) which limits the radial displacement of the shaft (3) is mounted on the resilient shaft (3).

6. A drilling device according to one of claims 1 to 5, characterized in that the shank extension (17) is mounted in a radial bearing (20).

7. A drilling device according to one of the preceding claims, characterized in that the drill bit (4) has a drill head (5) widening towards the front end abrasive face (6), and the abrasive face (6) is inclined or is stepped asymmetrically with respect to the centre line of drilling.

8. A drilling device according to one of the preceding claims, characterized in that the panel (10) lies on an oscillating table (11), which is caused to oscillate horizontally by means of a vibration device (13).

## Revendications

1. Dispositif de perçage pour la réalisation de perçages avec contre-dépouille dans des plaques de façade, dispositif constitué d'un porte-foret (23), entraîné par une broche de perçage (2), duquel fait saillie axialement un foret (4) doté d'une surface abrasive (6) du côté avant, le foret (4) pouvant être dévié radialement dans la profondeur du trou percé par rapport à l'axe médian de la broche de perçage (2) en vue de la réalisation de la contre-dépouille, et le porte-foret (23) étant fixé à la broche de perçage (2) par l'intermédiaire d'un arbre élastique (3) utilisé en tant qu'élément de support sur la broche de perçage (2), caractérisé en ce que l'arbre élastique (3) est logé dans un espace d'amortissement (18) rempli d'un produit à rôle d'agent d'amortissement (19), d'un prolongement de broche de perçage ayant la forme d'une douille.

2. Dispositif de perçage selon la revendication 1, caractérisé en ce que l'espace d'amortissement (18) est étanchéifié par rapport à l'extérieur, au moyen d'un joint (21), élastique dans la direction radiale, qui entoure l'arbre élastique (3).

3. Dispositif de perçage selon l'une des revendications précédentes, caractérisé en ce qu'un dispositif de vibration (8) met le porte-foret (23) en vibration radiale.

4. Dispositif de perçage selon la revendication 3, caractérisé en ce que le dispositif de vibration (8) est un électro-aimant (24) dont le champ magnétique est soumis à des pulsations, qui agit dans la zone du porte-foret (23) ou de l'arbre élastique (3).

5. Dispositif de perçage selon l'une des revendications précédentes, caractérisé en ce qu'est monté sur l'arbre élastique (3), un élément de butée (22), qui limite la déviation radiale de l'arbre (3).

6. Dispositif de perçage selon l'une des revendications 1 à 5, caractérisé en ce que le prolongement (17) de la broche est monté dans un palier radial (20).

7. Dispositif de perçage selon l'une des revendications précédentes, caractérisé en ce que le foret (4) comporte une tête de perçage (5) qui s'élargit en direction de la surface abrasive (6) du côté avant et en ce que la surface abrasive (6) est inclinée par rapport à l'axe médian du foret, ou étagée asymétriquement.

8. Dispositif de perçage selon l'une des revendications précédentes, caractérisé en ce que la plaque (10) repose sur une table vibrante (11) qui est mise en vibration horizontale au moyen d'un dispositif de vibration (13).
